# EUROPEAN PATENT SPECIFICATION

(11) **EP 0 556 970 B1**
(45) Date of publication and mention of the grant of the patent: **24.09.1997**
(21) Application number: 93300733.8
(22) Date of filing: 02.02.1993
(51) Int. Cl.: H04B 1/38, H04M 1/02

(54) **Memory module reader suitable for a radio telephone**
Speichermodulleser für Funktelefon
Lecteur de module mémoire susceptible d'être employé dans un radiotéléphone

(30) Priority: 18.02.1992 FI 920698
(43) Date of publication of application: 25.08.1993
(73) Proprietor: NOKIA MOBILE PHONES LTD., 24101 Salo (FI)
(72) Inventor: Koponen, Jarmo, SF-24130 Salo (FI)
(74) Representative: Frain, Timothy John

(56) References cited:
- EP-A- 0 276 403
- DE-U- 9 102 943

## Description

The present invention relates to a memory module reader for a radiotelephone.

As used in the present context, the term "memory module" includes a data card (such as a smart card (IC card) or a magnetic card), and other forms of package enclosing or carrying a memory device. The data card may be a passive memory card, i.e. essentially a read only memory (ROM), or an active processor card, i.e. capable of processing information internally within the card.

It is known in the field of cellular radio telephones, for example, to use a memory module such as a data card which may be removably inserted into the telephone. Data, such as identity information, is read from the inserted card and used in the subsequent operation of the telephone. By way of example European Patent Application EP-A-0,369,110 discloses a mobile radio telephone having a handset into which a data card storing subscriber-related information is insertable for transferring information from the data card to the working memory of the telephone.

The data card may be, for example, a so-called "smart-card" which is similar in size to a conventional plastic credit card and which includes a memory implemented as an integrated circuit device, commonly referred to as a "chip", in which information is stored. For this reason such cards are also often known as "chip cards".

In addition to subscriber identity information, such as the subscriber telephone number, and personal identification number (PIN), the smart card may store for example, call charge information (i.e. a charge meter), a telephone number index, or false PIN entries. As memory capacity expands in smaller chip sizes, more applications can be implemented on one smart card. Accordingly, it is envisaged that in future multipurpose smart cards will cover an even wider range of applications than personal identification and data storage services.

Indeed, in modern telecommunication systems, the applications for smart cards is expanding. One such application in this field is the so-called subscriber identity module (SIM) proposed for the pan-European digital cellular radio telephone system known as GSM (Groupe Spéciale Mobile). For more information about the SIM proposed for GSM, reference is invited to the European Telecommunications Standards Institute (ETSI) Recommendation GSM 11.11 which describes the technical SIM specifications and Recommendations GSM 02.17 for the functional characteristics of the SIM.

There are currently two different mechanical standards proposed for the GSM SIM card and it is probable that a third will evolve. The functionality of the SIM is the same for all sizes, it is essentially that the physical dimensions are different. At present the two standards are (a) a credit card size SIM, and (b) a plug-in SIM about 20mm x 25mm. The proposed third standard is likely to be a mid-sized SIM about half the size of a regular credit card. The rationale behind the different sizes is that the credit card size is perceived as a convenient size for the user from a practical standpoint. However, the credit card size is relatively large, and smaller card sizes are needed as miniaturization continues to drive down the overall size of the terminal (i.e. the radio telephone unit itself). The plug-in SIM is intended to be semi-permanently installed in the cellular telephone.

In future it is envisaged that compatibility problems are likely to arise when several different sizes of SIM are in wide use, because the SIM receiving device in a particular terminal will generally be designed to accept only one SIM type.

EP-A-0,494,503 discloses a card reader for a single data card, in which the card-receiving compartment is pivotally mounted on a main body portion of the card reader.

EP-A-0,522,762 discloses a telephone in which a smart card or a plug-in SIM is accommodated in a compartment which is concealed, and so closed, by the battery pack.

DE-U-9102943 discloses a telephone having a card reader adapter which can receive either a "large smart card" or a "SIM card". The "SIM card" can be introduced into the adaptor through a side wall. A flap is provided to cover the "SIM card" when it has been inserted.

EP-A-0,276,403 discloses various means for retaining a smart card in a telephone. One is a flap into which the card can be inserted. Another is a flap which holds the card between it and the remainder of the telephone.

According to the present invention there is provided a memory module reader for a radiotelephone, comprising in a common chassis first receiving means for removably receiving a first memory module, and second receiving means for removably receiving a second memory module, the second receiving means being movable between a module-storage position, for storing the second memory module whilst the first memory module is received by the first receiving means, and a module-reading position.

A reader in accordance with the invention has the advantage that it can accept two memory modules in the same device. Nevertheless the reader can be implemented in a relatively simple and compact manner.

In a specific embodiment the first and second receiving means are adapted to receive different types of memory module respectively. For example, in a GSM telephone, the first receiving means may be adapted to receive a credit-card size SIM, and the second receiving means may be adapted to receive a smaller plug-in type SIM.

In a preferred embodiment the second receiving means blocks insertion of a memory module into the first receiving means when the second receiving means is in the module-reading position. On the other hand, a module may be inserted into the first receiving means when the second receiving means is moved to the module-storage position. Suitably the first receiving means comprises a compartment, and the second receiving means is pivotally mounted for movement in the compartment. A recess may be provided which accommodates the second receiving means outside the compartment when the second receiving means is in the module-storage position. Thus the compartment may be configured to accommodate a memory module in a position overlying the recess when the second receiving means is in the module-storage position.

In the preferred embodiment a common set of electrical terminals are located in the reader to connect electrically with (a) a memory module present in the first receiving means when the second receiving means is in the module storage position, and (b) a memory module present in the second receiving means when the second receiving means is in the module reading position.

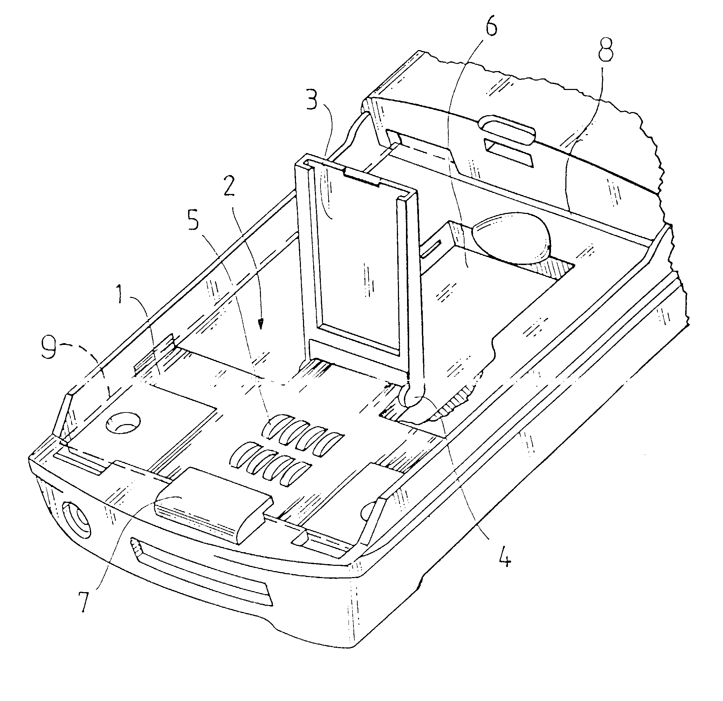

An embodiment of the invention will now be described, by way of example, with reference to the accompanying drawings in which:
the single Figure is a perspective view of part of a telephone incorporating a SIM card reader in accordance with the present invention.

The card reader 1 is incorporated in the lower portion of the chassis of a GSM handportable telephone, only part of which is shown in the drawing, adjacent the area where a battery pack (not shown) is intended to be attached to the telephone.

The card reader 1 includes a compartment 2 for accommodating a larger, credit-card sized SIM card. The position of the larger SIM card, when it is in the card-reading position, is depicted by the broken line labelled 9 in the Figure. One edge of the larger SIM card is located in a slot 8 in the main body of the telephone, and the opposite edge of the SIM card abuts a resiliently biassed retaining member 7 which has a lip extending on the upper side to hold the SIM card in place. The other two (longer) edges of the SIM card fit between the projecting side walls of the main housing of the telephone bounding the compartment 2.

When the larger SIM card is in the operative (card reading) position shown, a set of electrical terminals 5 in the bottom of compartment 2 connects electrically with complementary contact pads provided on the SIM card to enable information stored therein to be read from the card.

The larger SIM card may be removed by drawing back the resiliently biassed retaining member 7 which returns to its original position when the card has been removed.

A flap-like member 3 having side and end retaining walls has a generally open front and an open top end into which can be slideably inserted a plug-in type SIM card (not shown).

The plug-in SIM-card holder 3 is pivotally mounted at the bottom of the compartment 2 by means of a hinge 4. When the larger SIM card is not present in the compartment 2, the member 3 can be raised to a generally upright position (shown in the drawing) to facilitate insertion or removal of the plug-in SIM card. With the plug-in SIM card in place, the member 3 can be swung forward until the set of contact terminals 5 in the bottom of the compartment 2 connects electrically with complementary contact pads on the plug-in SIM card, thus enabling information to be read from the card. In this position the outer end of member 3 engages under the lip of the retaining member 7 which acts to hold the member 7 in the card-reading position. By releasing the spring-biased retaining member 7, the SIM card holder 3 can be pivoted through 180° to a card storage position in which is accommodated in a recess 6 provided at the bottom of the compartment 2. In this position the member 7 lies wholly outside the compartment 2, so that a larger credit card sized SIM card can be inserted into the card-receiving compartment 2. A thumb notch is present adjacent the recess 6 allowing better access to the card holder 3 so that it can be raised easily for card-insertion or removal, or for returning the card holder 3 to the card reading position. It will be evident that when the card holder 3 is in the card-reading position it extends into the compartment 2 in such manner as to prevent the insertion of a large credit card sized SIM card. Hence only one SIM card may be operative at a given time. However, when it is desired to insert a credit card sized SIM card the smaller plug-in SIM card does not have to be removed completely, but may simply be pivoted into the storage position.

In the embodiment depicted here the compartment 2 and the recess 6 lie adjacent the portion of the telephone which receives the battery pack in such manner that when a battery pack is attached to the telephone it acts to conceal both the compartment 2 and the recess 6. It is therefore necessary to remove the battery pack before a SIM card may be inserted or removed, and to allow the card holder 3 to be moved into different positions. In other words, it is not possible to change the SIM card while a battery pack is attached to the telephone.

In view of the foregoing description it will be evident to a person skilled in the art that various modifications may be mode within the scope of the present invention. For example the card holder 3 may be slideably, rather than pivotally mounted, on the chassis of the telephone.

## Claims

1. A memory module reader (1) for a radiotelephone, comprising in a common chassis first receiving means (2) for removably receiving a first memory module, and second receiving means (3) for removably receiving a second memory module, the second receiving means being movable between a module-storage position, for storing the second memory module whilst the first memory module is received by the first receiving means, and a module-reading position.

2. A memory module reader (1) as claimed in claim 1, wherein the first receiving means (2) is adapted to receive a memory module of one type, and the second receiving means (3) is adapted to receive a memory module of a different type.

3. A memory module reader (1) as claimed in claim 1 or claim 2, wherein in the module-reading position the second receiving means (3) blocks insertion of a memory module into the first receiving means (2).

4. A memory module reader (1) as claimed in any of the preceding claims, wherein the second receiving means (3) is movable to a further position between the module-reading position and the module-storage position, at which further position a memory module may be inserted into or removed from the second receiving means.

5. A memory module reader (1) as claimed in any of the preceding claims, wherein the first receiving means (2) comprises a compartment (2), and the second receiving means (3) is pivotally mounted for movement in the compartment.

6. A memory module reader (1) as claimed in claim 5, including a recess (6) which accommodates the second receiving means (3) outside the compartment when the second receiving means is in the module-storage position.

7. A memory module reader (1) as claimed in claim 6, wherein the compartment (2) is adapted to accommodate a memory module in a position overlying the recess (6) when the second receiving means (3) is in the module-storage position.

8. A memory module reader (1) as claimed in any of the preceding claims, including a common set of electrical terminals (5) located to connect electrically (a) a memory module present in the first receiving means (6) when the second receiving means (3) is in the module-storage position, and (b) a memory module present in the second receiving means when the second receiving means is in the module-reading position.

9. A memory module reader (1) as claimed in any of the preceding claims, including a releasable latch (7) for holding the second receiving means in the module-reading position.

10. A memory module reader (1) as claimed in claim 9, wherein the releasable latch (7) comprises means which abut a memory module present in the first receiving means.

## Patentansprüche

1. Speichermodulleser (1) für ein Funktelefon, mit in einem gemeinsamen Chassis befindlichen ersten Aufnahmemitteln (2) zur wiederherausnehmbaren Aufnahme eines ersten Speichermoduls, und zweiten Aufnahmemitteln (3) zur wiederherausnehmbaren Aufnahme eines zweiten Speichermoduls, wobei die zweiten Aufnahmemittel zwischen einer Modul-Speicher-Stellung zur Speicherung des zweiten Speichermoduls, wenn sich das erste Speichermodul in den ersten Speichermitteln befindet, und einer Modul-Lese-Stellung bewegbar sind.

2. Speichermodulleser (1) nach Anspruch 1, bei dem die ersten Aufnahmemittel (2) ein Speichermodul eines Typs und die zweiten Aufnahmemittel (3) ein Speichermodul eines anderen Typs aufnehmen können.

3. Speichermodulleser (1) nach Anspruch 1 oder 2, bei dem in der Modul-Lese-Stellung der zweiten Aufnahmemittel (3) die Aufnahme eines Speichermoduls durch die ersten Aufnahmemittel (2) nicht möglich ist.

4. Speichermodulleser (1) nach irgendeinem der vorangegangenen Ansprüche, bei dem die zweiten Aufnahmemittel ( 3) in eine zwischen der Modul-Lese-Stellung und der Modul-Speicher-Stellung liegende Stellung bringbar sind, in der ein Speichermodul in die zweiten Aufnahmemittel einsetzbar oder aus diesen herausnehmbar ist.

5. Speichermodulleser (1) nach irgendeinem der vorangegangenen Ansprüche, bei dem die ersten Aufnahmemittel (2) ein Fach (2) aufweisen, und die zweiten Aufnahmemittel (3) drehbar gelagert sind, um in das Fach hinein bewegt werden zu können.

6. Speichermodulleser (1) nach Anspruch 5, mit einer Vertiefung (6) zur Aufnahme der zweiten Aufnahmemittel (3) außerhalb des Fachs, wenn sich die zweiten Aufnahmemittel in der Modul-Speicher-Stellung befinden.

7. Speichermodulleser (1) nach Anspruch 6, bei dem das Fach (2) ein Speichermodul in einer die Vertiefung (6) überlagernden Stellung aufnimmt, wenn sich die zweiten Aufnahmemittel (3) in der Modul-Speicher-Stellung befinden.

8. Speichermodulleser (1) nach irgendeinem der vorangegangenen Ansprüche, mit einem gemeinsamen Satz elektrischer Anschlüsse (5) zur elektrischen Verbindung mit (a) einem in den ersten Aufnahmemitteln (2) enthaltenen Speichermodul, wenn sich die zweiten Aufnahmemittel (3) in der Modul-Speicher-Stellung befinden, und (b) einem in den zweiten Aufnahmemitteln enthaltenen Speichermodul, wenn sich die zweiten Aufnahmemittel in der Modul-Lese-Stellung befinden.

9. Speichermodulleser (1) nach irgendeinem der vorangegangenen Ansprüche, mit einem bewegbaren Riegel (7), um die zweitenAufnahmemittel in der Modul-Lese-Stellung zu halten.

10. Speichermodulleser (1) nach Anspruch 9, bei dem der bewegbare Riegel (7) Mittel enthält, an die ein in den ersten Aufnahmemitteln befindliches Speichermodul anschlägt.

## Revendications

1. Lecteur de module mémoire (1) pour un radiotéléphone, comprenant dans un châssis commun des premiers moyens de réception (2) pour recevoir de manière amovible un premier module mémoire et des seconds moyens de réception (3) pour recevoir de manière amovible un second module mémoire, les seconds moyens de réception étant déplaçables entre une position de conservation de module pour conserver le second module mémoire tandis que le premier module mémoire est reçu par les premiers moyens de réception et une position de lecture de module.

2. Lecteur de module mémoire (1) selon la revendication 1, dans lequel les premiers moyens de réception (2) sont conçus pour recevoir un module mémoire d'un premier type et les seconds moyens de réception (3) sont conçus pour recevoir un module mémoire d'un type

3. Lecteur de module mémoire (1) selon la revendication 1 ou la revendication 2, dans lequel dans la position de lecture de module, les seconds moyens de réception (3) bloquent l'insertion d'un module mémoire dans les premiers moyens de réception (2).

4. Lecteur de module mémoire (1) selon l'une quelconque des revendications précédentes, dans lequel les seconds moyens de réception (3) sont déplaçables à une autre position située entre la position de lecture de module et la position de conservation de module à laquelle autre position un module mémoire peut être inséré ou enlevé des seconds moyens de réception.

5. Lecteur de module mémoire (1) selon l'une quelconque des revendications précédentes, dans lequel les premiers moyens de réception (2) comprennent un compartiment (2) et les seconds moyens de réception (3) sont montés à pivoter pour déplacement dans le compartiment.

6. Lecteur de module mémoire (1) selon la revendication 5, comprenant un évidement (6) qui reçoit les seconds moyens de réception (3) à l'extérieur du compartiment lorsque les seconds moyens de réception sont dans la position de conservation de module.

7. Lecteur de module mémoire (1) selon la revendication 6, dans lequel le compartiment (2) est conçu pour recevoir un module mémoire dans une position recouvrant l'évidement (6) lorsque les seconds moyens de réception (3) sont dans la position de conservation de module.

8. Lecteur de module mémoire (1) selon l'une quelconque des revendications précédentes, comprenant un ensemble commun de bornes électriques (5) positionnées pour se connecter électriquement à (a) un module mémoire présent dans les premiers moyens de réception (6) lorsque les seconds moyens de réception (3) sont dans la position de conservation de module et à (b) un module mémoire présent dans les seconds moyens de réception lorsque les seconds moyens de réception sont dans la position de lecture de module.

9. Lecteur de module mémoire (1) selon l'une quelconque des revendications précédentes, comprenant un loquet libérable (7) pour maintenir les seconds moyens de réception dans la position de lecture de module.

10. Lecteur de module mémoire (1) selon la revendication 9, dans lequel le loquet libérable (7) comprend des moyens qui viennent en butée contre un module mémoire présent dans les premiers moyens de réception.
